# EUROPÄISCHE PATENTANMELDUNG

(11) **EP 4 660 161 A1**
(43) Veröffentlichungstag der Anmeldung: **10.12.2025**
(21) Anmeldenummer: 24180449.1
(22) Anmeldetag: 06.06.2024
(51) Int. Cl.: C03B 37/012, G02B 6/02

(54) **VERFAHREN FÜR DIE HERSTELLUNG EINER HOHLKERNFASER UND ZUR HERSTELLUNG EINER VORFORM FÜR EINE HOHLKERNFASER SOWIE VORFORM-VORPRODUKT DAFÜR**

(71) Anmelder: Heraeus Quarzglas GmbH & Co. KG, 63450 Hanau (DE)
(72) Erfinder: Rosenberger, Manuel, 63450 Hanau (DE); Plass, Jaqueline, 63450 Hanau (DE); Schuster, Kay, 63450 Hanau (DE); Koc, Burak, 63450 Hanau (DE); Tansel, Yusuf, 63450 Hanau (DE)
(74) Vertreter: Heraeus IP

(57) **Zusammenfassung**

Bei einem bekannten Verfahren zur Herstellung einer Vorform für eine antiresonante Hohlkernfaser mit einem ALIF-Design werden rohrförmige Antiresonanzelement-Vorformlinge (kurz: ARE-Vorformlinge), die jeweils ein Primärrohr und mindestens zwei Sekundärrohre umfassen, unter Bildung einer primären Vorform um die Innenseite eines Hüllrohres gleichmäßig verteilt. Die primäre Vorform wird entweder zur Hohlkernfaser gezogen oder zu einer sekundären Vorform weiterverarbeitet. Um hiervon ausgehend eine hohe Präzision der ARE-Vorformlinge und eine exakte Positionierung an vorgegebenen azimutalen Positionen des Hüllrohes zu ermöglichen, wird vorgeschlagen, dass die mindestens zwei Sekundärrohre mit Abstand zueinander an azimutalen Kontaktstellen an der Primärrohr-Innenseite angeordnet werden, und dass die Anordnung von Primärrohr und Sekundärrohren unter Bildung eines vorkonfektionierten ARE-Vorformlings thermisch getreckt wird. so dass der vorkonfektionierte ARE-Vorformling einen ovalen Querschnitt mit einer langen Hauptachse (AL) und mit einer kurzen Hauptachse (AS) aufweist, wobei die azimutalen Kontaktstellen beidseitig der kurzen Hauptachse (AS) liegen, und wobei die vorkonfektionierten ARE-Vorformlinge an peripheren Kontaktstellen der Hüllrohr-Innenseite gleichmäßig verteilt und so angeordnet werden, dass die kurzen Hauptachsen (AS) jeweils radial zur Hüllrohr-Mittelachse verlaufen.

## Beschreibung

### Technischer Hintergrund

Die Erfindung liegt auf dem Gebiet der optischen Fasertechnologie und dabei insbesondere im Bereich der antiresonanten Hohlkernfasern (englisch: "antiresonant hollow-core fibers"- kurz: AR-HCF). Der hohle Kernbereich ist von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der AREs können das auftreffende Licht reflektieren und durch den Faserkern leiten. Hohlkernfasern ermöglichen daher die Lichtführung in einem "hohlen" Kern, der entweder evakuiert oder mit einem Gas (zum Beispiel Luft) gefüllt ist.

Diese Fasertechnologie verspricht eine niedrige optische Dämpfung, ein sehr breites Transmissionsspektrum (auch im UV- oder IR-Wellenlängenbereich) und eine geringe Latenzzeit bei der Datenübertragung. Darüber hinaus eignen sich diese Fasern für spektroskopische Anwendungen sowie zur Übertragung von kurzen Laserpulsen zur Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Insbesondere betrifft die Erfindung ein Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl von rohrförmigen Antiresonanzelement-Vorformlingen, die jeweils ein Primärrohr und mindestens zwei Sekundärrohre umfassen, wobei jedes Primärrohr eine Primärrohr-Innenbohrung, eine Primärrohr-Außenseite und eine Primärrohr-Innenseite aufweist,
(c) Anordnen der Vielzahl der Antiresonanzelement-Vorformlinge in der Hüllrohr-Innenbohrung unter Bildung einer primären Vorform, wobei die Primärrohre um die Hüllrohr-Innenseite gleichmäßig verteilt werden,
(d) thermisches Strecken der primären Vorform zu der Hohlkernfaser oder Weiterverarbeitung der primären Vorform zu einer sekundären Vorform, aus der die Hohlkernfaser gezogen wird.

Außerdem betrifft die Erfindung ein Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl von rohrförmigen Antiresonanzelement-Vorformlingen, die jeweils ein Primärrohr und mindestens zwei Sekundärrohre umfassen, wobei jedes Primärrohr eine Primärrohr-Innenbohrung, eine Primärrohr-Außenseite und eine Primärrohr-Innenseite aufweist,
(c) Anordnen der Vielzahl der Antiresonanzelement-Vorformlinge in der Hüllrohr-Innenbohrung unter Bildung einer primären Vorform, wobei die Primärrohre um die Hüllrohr-Innenseite gleichmäßig verteilt werden,
(d) Weiterverarbeitung der primären Vorform zu einer sekundären Vorform.

Darüber hinaus betrifft die Erfindung ein Vorform-Vorprodukt für eine antiresonante Hohlkernfaser, wobei das Vorform-Vorprodukt umfasst: ein Hüllrohr mit einer Hüllrohr-Innenbohrung, einer Hüllrohr-Innenseite und einer Hüllrohr-Mittelachse, sowie eine Anzahl an einer Innenseite der Hüllrohr-Wandung angeordneter Antiresonanzelement-Vorformlinge, die jeweils ein Primärrohr und mindestens zwei Sekundärrohre aufweisen, wobei jedes Primärrohr eine Primärrohr-Innenbohrung, eine Primärrohr-Außenseite und eine Primärrohr-Innenseite aufweist, und wobei die Sekundärrohre mit Abstand zueinander an azimutalen Kontaktstellen an der Primärrohr-Innenseite angeordnet sind.

### Stand der Technik

Es ist bekannt, antiresonante Hohlkernfasern aus Vorformen zu ziehen, die einen hohlen Kern haben, der von einem Mantel umgeben ist, in dem mindestens einige der AREs als eine von Hohlkanälen durchzogene Querschnittsstruktur angelegt sind. Die Vorform wird beispielsweise durch Kollabieren und/oder Elongieren eines zylinderförmigen Vorform-Vorprodukts erzeugt (kurz: Vorprodukt), das dabei mit zusätzlichem Mantelmaterial überfangen werden kann. Das zylinderförmige Vorprodukt ist beispielsweise ein Ensemble, das sich aus einem Hüllrohr und einer Vielzahl zylinderförmiger Ausgangskomponenten zusammensetzt, oder es ist ein massiver Hohlzylinder, der den Hohlkern und mindestens den von Hohlkanälen durchzogenen Mantel umfasst, und der im Folgenden auch als "Kernvorform" (engl.: cane) bezeichnet wird.

Ausgangskomponenten des Vorprodukts, die in der Vorform die von Hohlkanälen durchzogene Querschnittsstruktur und in der fertigen Hohlkernfaser die AREs bilden, werden im Folgenden auch als "Antiresonanzelement-Vorformlinge" (kurz: "ARE-Vorformlinge") bezeichnet. Diese sind um die Innenseite eines Hüllrohres verteilt. Im einfachsten Fall sind die ARE-Vorformlinge als Rohre (oder Kapillaren) ausgebildet. Andere ARE-Vorformlinge sind aus mehreren, miteinander verschachtelten (englisch: nested) Rohren zusammengesetzt. Beispielsweise enthält eine Vorform für eine Hohlkernfaser mit dem sogenannten NANF-Design (englisch: Nested Antiresonant Nodeless Hollow Core Fibers) mehrere ARE-Vorformlinge, im einfachsten Fall jeweils bestehend aus einem Außenrohr (im Folgenden auch "Primärrohr" genannt) und einem einzelnen Nested-Element-Innenrohr (im Folgenden auch "Sekundärrohr" genannt), das an der Innenseite des Primärrohres angeordnet ist. Bei diesem einfachen NANF-Design liegt die Kontaktstelle des Sekundärrohres an der Innenseite des Primärrohres an derselben azimutalen Position (um die Hüllrohrmantelfläche) wie der Kontaktpunkt zwischen dem Primärrohr und dem Hüllrohr. Die Sekundärrohre bilden in der Hohlkernfaser zusätzliche Hohlkanäle, die zu einer Verringerung der optischen Faserdämpfung beitragen, indem sie zu mehrfachen radialen Reflexionen führen und Übergänge oder Knotenpunkte vermeiden, die zu Resonanzen führen.

Anhand von Simulationen des radialen Ausbreitungsprofils der optischen Leistung in der Hohlkernfaser konnte aber gezeigt werden, dass zum einen der größte Teil der optischen Leistung durch das Zentrum der Sekundärrohre verloren geht (Leckage); und zum anderen, dass der Spalt zwischen benachbarten Primärrohren als Barriere gegen Leistungsverlust wirkt, wobei eine Spalt-Verkleinerung die Leckage tendenziell weiter verringert.

Ein unter Anwendung dieser Ergebnisse simulativ verbessertes Design einer antiresonanten Hohlkernfaser ist in der WO 2020/030888 A1 beschrieben. Dabei wird im Unterschied zum einfachen NANF-Design das einzelne Sekundärrohr durch ein Paar von Sekundärrohren ersetzt, die voneinander beabstandet und beidseitig zur Verbindungslinie zwischen der Vorform-Mittelachse und dem Kontaktpunkt von Primärrohr und Hüllrohr angeordnet sind. Zwischen jedem Sekundärrohr-Paar wird ein radial durchgehender und kleiner Spalt in genau dem Bereich erzeugt, der beim NANF-Design die größte Leckage hat. Dieses Design wird als "ALIF-Design" bezeichnet (englisch: "Antiresonant Leakage Inhibited Fibers").

Beim ALIF-Design sind die voneinander beabstandeten Sekundärrohr-Paare an azimutalen Stellen um den Umfang des Primärrohes befestigt, die beide zum peripheren Kontaktpunkt des Primärrohres am Hüllrohr versetzt sind. Dies führt zu mehrfachen radialen Reflexionen und vermeidet Knotenpunkte, die zu Resonanzen führen, die die Leckage erhöhen, die Bandbreite verringern und die optischen Verluste vergrößern würden.

Die Ausgangselemente, die einen ARE-Vorformling bilden und damit auch jeder ARE-Vorformling weisen eine gewisse Abweichung von einer Sollgeometrie auf. Jeder Schritt der Positionierung und Umformung führt zwangsläufig zu weiteren Geometrieabweichungen, die sich in der Vorform zu einem absoluten Geometriefehler aufsummieren können. Dies stellt hohe Anforderungen an die Genauigkeit beim Positionieren und Fixieren der Ausgangselemente an ihren jeweilen SollPositionen insbesondere bei kompakten Anordnungen wie beim ALIF-Design. Zur Verbesserung der Positionierungsgenauigkeit bei einem einfachen NANF-Design mit einem Primärrohr aus Quarzglas und einem an dessen Innenwandung angeordneten Sekundärrohr aus Quarzglas wird in der WO 2022/128271 A1 vorgeschlagen, das Ensemble aus Primärrohr und Sekundärrohr gemeinsam zu einem Kapillarhalbzeug zu elongieren. Das elongierte Kapillarhalbzeug setzt sich somit aus einer ARE-Außenkapillare und einer fest mit dieser verbundenen NE-Innenkapillare zusammen. Die elongierten Kapillarhalbzeuge werden an der Innenseite eines Hüllrohres aus Quarzglas montiert. Für diese Montage kann eine Schablone eingesetzt werden. Die Kapillarhalbzeuge werden mit der Hüllrohr-Innenseite verschmolzen und dieses Ensemble wird zu einem Vorform-Vorprodukt oder zu einer Vorform elongiert, aus der anschließend die Hohlkernfaser gezogen wird.

Aus der WO 2019/008352 A1 ist ein Verfahren zur Herstellung von Vorformen für antiresonante Hohlkernfasern bekannt, bei dem Primärrohre an der Innenseite eines Hüllrohres aus Quarzglas positioniert und mittels Laser dort angebondet werden. An der Innenseite des Primärrohres kann vorab ein Sekundärrohr ebenfalls mittels Laser fixiert und so ein vorgefertigte Kapillarhalbzeug erzeugt werden. Die Positionierung des Primärrohres kann beispielsweise durch Gravitation oder mittels magnetischer Elemente erfolgen.

In der WO 2019/053412 A1 erfolgt die Positionierung der Primärrohre an vordefinierten peripheren Stellen innerhalb des Hüllrohres mit Hilfe von Abstandselementen, die jeweils mit zwei benachbarten Primärrohren in Kontakt sind. Der radiale Abstand r₂ zwischen diesen Kontaktpunkten und der Hüllrohr-Mittelachse ist größer als der radiale Abstand r₁ zwischen den Längsachsen des Primärrohres und der Hüllrohr-Mittelachse. Die Abstandselemente können eine integrale Struktur des Hüllrohres bilden. Dabei kann die Hüllrohr-Innenseite durch mechanische Bearbeitung so geformt werden, dass die Abstandselemente von der Innenseite radial nach innen ragen. Bei einem Beispiel haben die Abstandselemente einen rechteckigen Querschnitt, der aus der konkaven Innenseite des Hüllrohres herausragt.

Die Strukturierung der Hüllrohr-Innenwand zur Erzeugung von Abstandselementen ist zeitintensiv. Beim Anschweißen der ARE-Vorformlinge an den Abstandselementen kann es durch Sublimation von SiO₂ zu Soot-Ablagerungen kommen, die sich auf die optischen Eigenschaften der Hohlkernfaser ungünstig auswirken.

### Technische Aufgabenstellung

Zur Einhaltung der Resonanz- beziehungsweise Antiresonanzbedingungen sind bereits geringe Maßabweichungen in der Größenordnung der Arbeitswellenlänge des zu führenden Lichts nicht tolerierbar.

Ein Ziel der Erfindung ist es daher, ein Verfahren zur Herstellung einer antiresonanten Hohlkernfaser mit dem ALIF-Design und einer Vorform für derartige antiresonante Hohlkernfasern bereitzustellen, bei denen eine hohe Präzision der Antiresonanzelemente und eine exakte Positionierung in der Hohlkernfaser reproduzierbar erreicht werden kann. Insbesondere soll eine möglichst exakte Positionierung der ARE-Vorformlinge an vorgegebenen azimutalen Positionen des Hüllrohes ermöglicht werden und Soot-Ablagerungen verhindert oder verringert werden, um eine Vorhersage des Ziehergebnisses zu erleichtern.

Darüber hinaus liegt der Erfindung die Aufgabe zugrunde, ein Vorform-Vorprodukt anzugeben, aus der reproduzierbar eine antiresonante Hohlkernfaser mit möglichst exakt positionierten und geometrisch präzisen Antiresonanzelementen gezogen werden kann.

### Zusammenfassung der Erfindung

Hinsichtlich des Verfahrens zur Herstellung der antiresonanten Hohlkernfaser wird diese Aufgabe durch ein Verfahren mit den Merkmalen von Anspruch 1 gelöst.

Ausgehend von einem Verfahren zur Herstellung der Hohlkernfaser gemäß der eingangs genannten Gattung umfasst das Bereitstellen der ARE-Vorformlinge gemäß Verfahrensschritt (b) jeweils folgende Maßnahmen:
- Anordnen der mindestens zwei Sekundärrohre mit Abstand zueinander an azimutalen Kontaktstellen an der Primärrohr-Innenseite,
- thermisches Strecken der Anordnung von Primärrohr und mindestens zwei Sekundärrohren unter Bildung eines vorkonfektionierten ARE--Vorformlings, der einen ovalen Querschnitt mit einer langen Hauptachse und mit einer kurzen Hauptachse aufweist, wobei die azimutalen Kontaktstellen beidseitig der kurzen Hauptachse liegen,
wobei zum Anordnen der Vielzahl der ARE-Vorformlinge gemäß Verfahrensschritt (c) mehrere der vorkonfektionierten ARE-Vorformlinge an peripheren Kontaktstellen der Hüllrohr-Innenseite gleichmäßig verteilt und so angeordnet werden, dass die kurzen Hauptachsen jeweils radial zur Hüllrohr-Mittelachse verlaufen.

Ausgangspunkt für die Herstellung der antiresonanten Hohlkernfaser ist ein Ensemble zylinderförmiger Ausgangskomponenten, das hier auch als "primäre Vorform" bezeichnet wird. Die Herstellung der primären Vorform umfasst üblicherweise den Einbau von zylinderförmigen ARE-Vorformlingen und deren Verbindung mit der Innenseite des Hüllrohres. Bei der Erfindung liegt mindestens ein Teil der ARE-Vorformlinge in Form eines vorkonfektionierten ARE-Vorformlings vor. Dieser wird erhalten durch thermisches Strecken der Anordnung von Primärrohr und mindestens zwei Sekundärrohren. Im vorkonfektionierten ARE-Vorformling liegen somit das ursprüngliche Primärrohre und die ursprünglichen Sekundärrohre in elongierter Form vor. Er weist folgende Eigenschaften auf:
(i) er setzt sich zusammen aus einem (thermisch gestreckten) Primärrohr und zwei oder mehr (thermisch gestreckten) Sekundärrohren, die jeweils an einer azimutalen Kontaktstelle mit der Primärrohr-Innenseite verschweißt sind,
(ii) er stellt ein selbsttragendes Gebilde dar, das aus dem Primärrohr und den Sekundärrohren zusammengesetzt ist, so dass diese Rohre in Form des gefügten Gebildes zusammen handhabbar sind,
(iii) er hat einen ovalen Querschnitt, idealerweise einen elliptischen Querschnitt, mit einer langen Hauptachse und mit einer kurzen Hauptachse,
(iv)die azimutalen Kontaktstellen befinden sich auf verschiedenen Seiten der kurzen Hauptachse, und
(v) im Fall von genau zwei Sekundärrohren haben die beiden azimutalen Kontaktstellen im bevorzugten Fall die gleiche Distanz von der kurzen Hauptachse; im Idealfall liegen sie sich spiegelsymmetrisch an der kurzen Hauptachse gegenüber.

Mehrere der so vorkonfektionierten ARE-Vorformlinge werden an der Hüllrohr-Innenseite gleichmäßig verteilt und dabei so angeordnet, dass die kurzen Hauptachsen jeweils radial zur Hüllrohr-Mittelachse verlaufen. Die ovale Vorkonfektionierung der ARE-Vorformlinge und ihre spezifische Anordnung an der Hüllrohr-Innenseite tragen zur Lösung der technischen Aufgabe wie folgt bei:
- Innerhalb eines Primärrohres steht nur ein begrenzter Raum für die Positionierung der Sekundärrohre zur Verfügung. Es ist möglichst zu vermeiden, dass die Sekundärrohre in Kontakt miteinander gelangen. Zu Kontakten kann es insbesondere beim Elongieren zur Herstellung des vorkonfektionierten ARE-Vorformlings und bei nachfolgenden Elongierprozessen der primären Vorform kommen, weil sich infolge der dabei ablaufenden Kollabier- und Konstriktionsvorgänge der Raum weiter verengt, der für die Sekundärrohre zur Verfügung steht.
   Die ovale (ideal elliptische) Querschnittsform des vorkonfektionierten ARE-Vorformlings zeigt sich insbesondere in einer ovalen (ideal elliptischen) Querschnittsform des Primärrohres. Dessen ovaler Innenquerschnitt hat eine vergleichsweise lange Hauptachse. Befinden sich die azimutalen Kontaktstellen von zwei Sekundärrohren an den Enden der langen Hauptachse, so haben diese Sekundärrohre den maximal möglichen Abstand zueinander, so dass ein Kontakt bestmöglich vermieden wird. Aber auch Abstände unterhalb dieses Optimums können das Kontakt-Risiko im Vergleich zu einer runden Querschnittsform vermindern.
- Der vorkonfektionierte ARE-Vorformling ist ein selbsttragendes Gebilde, und alle das Gebilde bildenden Komponenten sind zusammen handhabbar und insbesondere zusammen an der Innenseite des Hüllrohres montierbar. Dadurch entfallen Positionierungs- und Ausrichtungsmaßnahmen, die bei einer Einzelmontage der Komponenten zur Herstellung der primären Vorform erforderlich wären. Das genaue Positionieren und das Fixieren der Komponenten ist außerhalb der Hüllrohr-Innenbohrung einfacher zu bewerkstelligen als in der Innenbohrung. Insoweit werden diese Montageschritte erleichtert und die Maßhaltigkeit der ARE-Vorformlinge wird verbessert.
- Erst im Verfahrensschritt (c) werden die vorkonfektionierten ARE-Vorformlinge in die Hüllrohr-Innenbohrung eingesetzt. Davor erfolgt vorzugsweise eine Qualitätskontrolle, bei der beispielsweise die Maßhaltigkeit der vorkonfektionierten ARE-Vorformlinge und die Positionen und gegenseitigen Ausrichtungen der einzelnen Komponenten überprüft werden.
- Der vorkonfektionierte ARE-Vorformling ist bei der Montage an der Hüllrohr-Innenseite so orientiert, dass die kurze Hauptachse des ovalen Querschnitts in radialer Richtung verläuft. Bei dieser Orientierung schmiegt sich der ovale Querschnitt an die Rundung der Hüllrohr-Innenseite an, was die Montage einfacher und genauer macht. Eine besondere konstruktive Gestaltung der Hüllrohr-Innenwand zwecks genauer Positionierung einzelner Ausgangskomponenten des ARE-Vorformlings ist dafür nicht erforderlich. Im einfachsten Fall hat die Hüllrohr-Innenbohrung einen runden Querschnitt.

Die unter Einsatz der vorkonfektionierten ARE-Vorformlinge erzeugte primäre Vorform kann direkt zu der Hohlkernfaser gezogen werden. In der Regel wird die primäre Vorform aber weiterverarbeitet, um daraus die Vorform oder ein hier auch als "sekundäre Vorform" bezeichnetes Vorform-Vorprodukt zu erzeugen. Gegebenenfalls wird die Hohlkernfaser aus der sekundären Vorform gezogen. Das Hinzufügen von Mantelmaterial erfolgt beispielsweise durch Aufkollabieren eines Überfangzylinders auf die primäre Vorform oder auf die sekundäre Vorform. Die koaxiale Anordnung aus primärer Vorform und Überfangzylinder wird beim Aufkollabieren des Überfangzylinders elongiert oder sie wird nicht elongiert.

Je größer der Ovalitätsgrad ist, umso länger ist die lange Hauptachse des Ovals und umso größer ist der maximal zur Verfügung stehende freie Abstand zwischen den Sekundärrohren. Im Hinblick darauf weisen die vorkonfektionierten ARE-Vorformlinge vorteilhafterweise einen Ovalitätsgrad von mindestens 1,1 auf. Bei einem sehr großen Ovalitätsgrad von mehr als 1,5 kann sich der zur Aufnahme der Sekundärrohre zur Verfügung stehende Raum verkleinern.

Ein geringer Abstand der Sekundärrohre bereits im vorkonfektionierten ARE-Vorformling kann während eines nachfolgenden Elongierprozesses der primären Vorform, bei dem das Primärrohr aufgrund der Oberflächenspannung teilweise kollabiert, zu einem Kontakt der Sekundärrohre führen, was die primäre Vorform unbrauchbar machen würde.

Im Hinblick darauf hat es sich als vorteilhaft erwiesen, wenn die Sekundärrohre im vorkonfektionierten ARE-Vorformling einen Abstand im Bereich von mindestens 500um voneinander haben, bevorzugt einen Abstand im Bereich von 1 bis 5mm. Die Einhaltung dieses Abstands wird durch die ovale Querschnittsform des vorkonfektionierten ARE-Vorformlings erleichtert.

Eine bevorzugte Verfahrensweise ist dadurch gekennzeichnet, dass das Primärrohr einen Innendurchmesser von mindestens 25mm und eine Wanddicke von mindestens 1,5mm aufweist.

Die Herstellung des vorkonfektionierten ARE-Vorformlings umfasst einen thermischen Streckprozess, bei dem das Primärrohr auf den gewünschten Außendurchmesser ausgezogen und dabei über seine gesamte Länge mit den Sekundärrohren verbunden wird. Es hat sich vorteilhaft erwiesen, wenn das Primärrohr dabei einen anfänglichen Innendurchmesser von mindestens 25mm und eine Wanddicke von mindestens 1,5mm aufweist. Bei sehr großen Innendurchmessern von mehr als 100mm und Wanddicken von mehr als 10mm kann das homogene Erhitzen des Primärrohres zunehmend erschwert sein.

Durch die anfänglichen großen radialen Abmessungen der Ausgangskomponenten (Primärrohr und Sekundärrohre) erhält die Verbindung mit den Sekundärrohren eine höhere Stabilität, die sich auf die Maßhaltigkeit der vorkonfektionierten ARE-Vorformling vorteilhaft auswirkt. Im Hinblick darauf haben die Sekundärrohre bevorzugt einen anfänglichen Außendurchmesser von mindestens 12mm und eine Wanddicke von mindestens 1,5mm. Bei sehr großen Außendurchmessern von mehr als 70mm und Wanddicken von mehr als 6mm kann das homogene Erhitzen der Sekundärrohre zunehmend erschwert sein.

In dem Zusammenhang wird beim thermischen Strecken der Anordnung von Primärrohr und Sekundärrohren unter Bildung des vorkonfektionierten ARE-Vorformlings vorteilhafterweise ein Elongierverhältnis von mindestens 3,5 eingestellt.

Dabei handelt es sich um ein vergleichsweise großes Elongierverhältnis für ein thermisches Strecken der Ausgangskomponenten (Primärrohr und Sekundärrohre). Dies hängt auch mit den anfänglich großen radialen Abmessungen der Ausgangskomponenten zusammen, und es trägt außerdem bei zu einer durchgehenden, stabilen Verbindung des Primärrohres und der Sekundärrohre. Bei sehr großen Elongierverhältnissen von mehr als 12 kann die zeitliche Stabilität des thermischen Streckprozesses zunehmend schwieriger einzuhalten sein.

Es hat sich als vorteilhaft erwiesen, wenn im Querschnitt des vorkonfektionierten ARE-Vorformlings sich die lange Hauptachse und die kurze Hauptachse in einem Mittelpunkt schneiden, und dass Geraden durch den Mittelpunkt und die azimutalen Kontaktstellen von zwei der Sekundärrohre einen Winkel von maximal 160 Grad einschließen, bevorzugt einen Winkel im Bereich von 70 bis 160 Grad und besonders bevorzugt einen Winkel im Bereich von 100 bis 140 Grad.

Die Primärrohr-Innenbohrung wird von der langen Hauptachse quasi in einen ersten Teilraum und in einen zweiten Teilraum unterteilt, wobei sich die mindestens zwei Sekundärrohre im Wesentlichen gemeinsam in einem dieser beiden Teilräume befinden. Dies ist vorteilhaft für die Lichtführung in der Hohlkanalfaser, in der die Sekundärrohre zu "inneren Kapillaren" gestreckt sind, wobei neben der Wandstärke auch der Durchmesser und damit der Abstand der inneren Kapillaren entscheidend sind.

Hinsichtlich des Verfahrens zur Herstellung einer Vorform für eine antiresonante Hohlkernfaser wird die oben angegebene Aufgabe durch ein Verfahren gemäß Anspruch 9 gelöst.

Ausgehend von einem Verfahren zur Herstellung der Vorform gemäß der eingangs genannten Gattung umfasst das Bereitstellen der ARE-Vorformlinge gemäß Verfahrensschritt (b) jeweils:
- ein Anordnen der mindestens zwei Sekundärrohre mit Abstand zueinander an azimutalen Kontaktstellen an der Primärrohr-Innenseite,
- ein thermisches Strecken der Anordnung von Primärrohr und Sekundärrohren unter Bildung eines vorkonfektionierten ARE-Vorformlings, der einen ovalen Querschnitt mit einer langen Hauptachse und mit einer kurzen Hauptachse aufweist, wobei die azimutalen Kontaktstellen beidseitig der kurzen Hauptachse liegen und von dieser den gleichen Abstand haben,
wobei zum Anordnen der Vielzahl der ARE-Vorformlinge gemäß Verfahrensschritt (c) mehrere der vorkonfektionierten ARE-Vorformlinge an peripheren Kontaktstellen der Hüllrohr-Innenseite gleichmäßig verteilt und so angeordnet werden, dass die kurzen Hauptachsen jeweils radial zur Hüllrohr-Mittelachse verlaufen.

Ausgangspunkt für die Herstellung der antiresonanten Hohlkernfaser ist ein Ensemble von zylinderförmigen Ausgangskomponenten, das hier auch als "primäre Vorform" bezeichnet wird. Die Herstellung der primären Vorform umfasst üblicherweise den Einbau von zylinderförmigen ARE-Vorformlingen und deren Verbindung mit der Innenseite des Hüllrohres. Bei der Erfindung liegt mindestens ein Teil der ARE-Vorformlinge in Form eines vorkonfektionierten ARE-Vorformlings vor, der erhalten wird durch thermisches Strecken der Anordnung von Primärrohr und den mindestens zwei Sekundärrohren. Im vorkonfektionierte ARE-Vorformling liegen das ursprüngliche Primärrohre und die ursprünglichen Sekundärrohre somit in elongierter Form vor. Er weist folgende Eigenschaften auf:
(i) er setzt sich zusammen aus einem (thermisch gestreckten) Primärrohr und mindestens zwei (thermisch gestreckten) Sekundärrohren, die jeweils an einer azimutalen Kontaktstelle mit der Primärrohr-Innenseite verschweißt sind,
(ii) er stellt ein selbsttragendes Gebilde dar, das aus dem Primärrohr und den Sekundärrohren zusammengesetzt ist, so dass Primärrohr und Sekundärrohre in Form des gefügten Gebildes zusammen handhabbar sind,
(iii) er hat einen ovalen Querschnitt, idealerweise einen elliptischen Querschnitt, mit einer langen Hauptachse und mit einer kurzen Hauptachse,
(iv)die azimutalen Kontaktstellen befinden sich auf verschiedenen Seiten der kurzen Hauptachse, und
(v) im Fall von genau zwei Sekundärrohren haben die beiden azimutalen Kontaktstellen vorzugsweise die gleiche Distanz von der kurzen Hauptachse; im Idealfall liegen sie sich spiegelsymmetrisch an der kurzen Hauptachse gegenüber.

Zur Herstellung des Ensembles werden mehrere der so vorkonfektionierten ARE-Vorformlinge an der Hüllrohr-Innenseite gleichmäßig verteilt und dabei so angeordnet, dass die kurzen Hauptachsen jeweils radial zur Hüllrohr-Mittelachse verlaufen.

Die ovale Vorkonfektionierung der ARE-Vorformlinge und ihre spezifische Anordnung an der Hüllrohr-Innenseite tragen zur Lösung der technischen Aufgabe wie folgt bei:
- Innerhalb eines Primärrohres steht nur ein begrenzter Raum für die Positionierung der Sekundärrohre zur Verfügung. Es ist möglichst zu vermeiden, dass die Sekundärrohre in Kontakt miteinander gelangen. Zu Kontakten kann es insbesondere beim thermischen Strecken zur Herstellung des vorkonfektionierten ARE-Vorformlings und bei nachfolgenden Elongierprozessen der primären Vorform kommen, weil sich infolge der dabei ablaufenden Kollabier- und Konstriktionsvorgänge der Raum weiter verengt, der für die Sekundärrohre zur Verfügung steht.
   Die ovale (ideal elliptische) Querschnittsform des vorkonfektionierten ARE-Vorformlings zeigt sich insbesondere in einer ovalen (ideal elliptischen) Querschnittsform des Primärrohres. Dessen ovaler Innenquerschnitt hat eine vergleichsweise lange Hauptachse. Befinden sich im Fall von genau zwei Sekundärrohren die azimutalen Kontaktstellen an den Enden der langen Hauptachse, so haben diese Sekundärrohre den maximalen möglichen Abstand zueinander, so dass ein Kontakt bestmöglich vermieden wird. Aber auch Abstände unterhalb dieses Optimums können das Kontakt-Risiko im Vergleich zu einer runden Querschnittsform vermindern.
- Der vorkonfektionierte ARE-Vorformling ist ein gefügtes, selbsttragendes Gebilde, und alle das Gebilde bildenden Komponenten sind zusammen handhabbar und insbesondere zusammen an der Innenseite des Hüllrohres montierbar. Dadurch entfallen Positionierungs- und Ausrichtungsmaßnahmen, die bei einer Einzelmontage der Komponenten zur Herstellung der primären Vorform erforderlich wären. Das genaue Positionieren und das Fixieren der Komponenten ist außerhalb der Hüllrohr-Innenbohrung einfacher zu bewerkstelligen als in der Innenbohrung. Insoweit werden diese Montageschritte erleichtert und die Maßhaltigkeit der ARE-Vorformlinge wird verbessert.
- Erst im Verfahrensschritt (c) werden die vorkonfektionierten ARE-Vorformlinge in die Hüllrohr-Innenbohrung eingesetzt. Davor erfolgt vorzugsweise eine Qualitätskontrolle, bei der beispielsweise die Maßhaltigkeit der vorkonfektionierten ARE-Vorformlinge und die Positionen und gegenseitigen Ausrichtungen der einzelnen Komponenten überprüft werden.
- Der vorkonfektionierte ARE-Vorformling ist bei der Montage an der Hüllrohr-Innenseite so orientiert, dass die kurze Hauptachse des ovalen Querschnitts in radialer Richtung verläuft. Bei dieser Orientierung schmiegt sich der ovale Querschnitt an die Rundung der Hüllrohr-Innenseite an, was die Montage einfacher und genauer macht. Eine besondere konstruktive Gestaltung der Hüllrohr-Innenwand zwecks genauer Positionierung einzelner Ausgangskomponenten des ARE-Vorformlings ist dafür nicht erforderlich. Im einfachsten Fall hat die Hüllrohr-Innenbohrung einen runden Querschnitt.

Maßnahmen zur Herstellung der Vorform und insbesondere zur Herstellung der vorkonfektionierten ARE-Vorformlinge sind weiter oben im Zusammenhang der Herstellung der Hohlkernfaser erläutert und diese Erläuterungen werden hiermit einbezogen.

Hinsichtlich des Vorform-Vorprodukts für eine Hohlkernfaser wird die oben genannte technische Aufgabe durch ein Vorform-Vorprodukt mit den Merkmalen von Anspruch 10 gelöst.

Insbesondere wird diese Aufgabe ausgehend von einem Vorform-Vorprodukt der eingangs genannten Gattung erfindungsgemäß dadurch gelöst, dass mindestens einige der ARE-Vorformlinge als vorkonfektionierter ARE-Vorformlinge vorliegen, die jeweils einen ovalen Querschnitt mit einer langen Hauptachse und mit einer kurzen Hauptachse aufweisen, wobei die azimutalen Kontaktstellen beidseitig der kurzen Hauptachse liegen, und dass mehrere der vorkonfektionierten ARE-Vorformlinge an peripheren Kontaktstellen der Hüllrohr-Innenseite gleichmäßig verteilt und so angeordnet sind, dass die kurzen Hauptachsen jeweils radial zur Hüllrohr-Mittelachse verlaufen.

Der Mantelbereich des Vorform-Vorprodukts umfasst das Hüllrohr, das von weiterem Mantelmaterial umhüllt sein kann. An der Innenseite des Hüllrohres sind ARE-Vorformlinge an peripheren Kontaktstellen der Hüllrohr-Innenseite gleichmäßig verteilt angeordnet und mit dieser beispielsweise durch Ankleben oder thermisches Bonden verbunden. Mindestens ein Teil dieser ARE-Vorformling, vorzugsweise alle ARE-Vorformlinge liegen als "vorkonfektionierte ARE-Vorformlinge" vor. Diese umfassen jeweils ein Primärrohr und mindestens zwei Sekundärrohre, die an azimutalen Kontaktstellen an der Innenseite der Primärrohr-Innenbohrung fixiert sind.

Die vorkonfektionierten ARE-Vorformlinge werden durch thermisches Strecken einer Anordnung erhalten, die ein ursprüngliches Primärrohr und mindestens zwei ursprüngliche Sekundärrohre umfasst. Die ovale (ideal elliptische) Querschnittsform des vorkonfektionierten ARE-Vorformlings zeigt sich insbesondere in einer ovalen (ideal elliptischen) Querschnittsform des thermisch gestrecktes Primärrohres. Die lange Hauptachse des ovalen Querschnitts ist größer als der Durchmesser eines flächengleichen Kreises, so dass entlang der langen Hauptachse ein vergleichsweise größerer Innenraum zur Verfügung steht. Der ovale Querschnitt vereinfacht dadurch eine kontaktfreie Anordnung der Sekundärrohre innerhalb der Primärrohr-Innenbohrung. Durch die Vorkonfektionierung entfallen Positionierungs- und Ausrichtungsmaßnahmen, die andernfalls bei der Montage zur Herstellung des Vorform-Vorprodukts erforderlich wären. Insoweit werden diese Montageschritte erleichtert und die Maßhaltigkeit der ARE-Vorformlinge wird verbessert.

Die azimutalen Kontaktstellen der thermisch gestreckten Sekundärrohre an der Innenseite der thermisch gestreckten Primärrohres befinden sich beidseitig und im Fall von genau zwei Sekundärrohren bevorzugt in gleicher Distanz zur kurzen Hauptachse.

Das Vorform-Vorprodukt entspricht der weiter oben beschriebenen "primären Vorform". Maßnahmen zur Herstellung der primären Vorform sind weiter oben erläutert und diese Erläuterungen werden hiermit für das Vorform-Vorprodukt einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der übrigen Beschreibung Gesagte maßgeblich.

Für Begriffe und Messverfahren, die in der Beschreibung nicht speziell definiert sind, ist die Auslegung gemäß der Internationalen Fernmeldeunion (ITU; International Telecommunication Union) maßgeblich. Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum am nächsten vor dem der vorliegenden Anmeldung liegt. Sollten Messbedingungen nicht angegeben sein, so gelten als Standard-Bedingungen (SATP-Bedingungen) für die Temperatur 298,15 K (25°C, 77°F) und für den absoluten Druck 100 kPa (14,504 psi, 0.986 atm).

### Antiresonanzelemente

Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Vorform

Die Vorform ist dasjenige Bauteil oder Bauteil-Ensemble, aus dem die antiresonante Hohlkernfaser gezogen wird. Das Bauteil beziehungsweise das Bauteil-Ensemble hat die Kern-Mantel-Querschnittsstruktur der Hohlkernfaser.

### Vorform-Vorprodukt - Ensemble - Kernvorform

Die Vorform wird durch einmaliges oder mehrmaliges thermisches Strecken eines Vorform-Vorprodukts erhalten. Das Vorform-Vorprodukt (kurz: Vorprodukt) ist beispielsweise ein mehr oder weniger loses Ensemble von zylinderförmigen Ausgangskomponenten (engl.: "stack" oder "assembly"; hier auch als "Ensemble" oder als "primäre Vorform" bezeichnet) oder es ist ein gefügter, massiver Hohlzylinder, der den Hohlkern und mindestens den von Hohlkanälen durchzogenen Mantel umfasst (engl.: "cane"; hier auch als "Kernvorform" oder als "sekundäre Vorform" bezeichnet). Beim Ensemble können die zylinderförmigen Ausgangskomponenten und das Hüllrohr teilweise miteinander verschmolzen sein, insbesondere an den Hüllrohr-Enden. In der Kernvorform, die durch Kollabieren und/oder thermisches Strecken des Ensemble erhalten werden kann, sind die Ausgangskomponenten in der Regel über die gesamte Länge mit dem Hüllrohr verbunden.

Die Weiterverarbeitung des Vorform-Vorprodukts führt entweder zur Vorform oder zu einem weiteren Vorform-Vorprodukt und kann eine einmalige oder wiederholte Durchführung von einem oder mehreren der folgenden Heißformprozesse umfassen:
(i) Thermisches Strecken,
(ii) Kollabieren,
(iii) Kollabieren und gleichzeitiges thermisches Strecken,
(iv) Aufkollabieren von zusätzlichem Mantelmaterial,
(v) Aufkollabieren von zusätzlichem Mantelmaterial und anschließendes thermisches Strecken,
(vi) Aufkollabieren von zusätzlichem Mantelmaterial und gleichzeitiges thermisches Strecken.

### Antiresonanzelement-Vorformling

Als Antiresonanzelement-Vorformlinge werden zylinderförmige Ausgangskomponenten eines in Form eines Ensembles vorliegenden Vorform-Vorprodukts bezeichnet, die beispielsweise in einer Hüllrohr-Innenbohrung angeordnet sind. Sie werden im Wesentlichen durch thermisches Strecken zu Hohlkanälen in einem späteren Vorprodukt oder in der Vorform umgeformt, und sie bilden letztlich die Antiresonanzelemente in der Hohlkernfaser. Verschachtelte ARE-Vorformlinge bilden in der Hohlkernfaser verschachtelte Antiresonanzelemente. Sie setzen sich zusammen aus einem Primärrohr und mindestens einem weiteren Strukturelement, das in der Innenbohrung des Primärrohres angeordnet ist. Bei dem mindestens einen weiteren Strukturelement kann es sich um ein weiteres Rohr handeln, das an der Innenmantelfläche des Primärrohres anliegt. Das weitere Rohr wird hier als "Sekundärrohr" bezeichnet.

In der Innenbohrung des Sekundärrohres kann bei mehrfach verschachtelten ARE-Vorformlingen mindestens ein weiteres Strukturelement angeordnet sein, beispielsweise ein an der Innenmantelfläche des verschachtelten Sekundärrohres anliegendes, drittes Rohr, das hier als "Tertiärrohr" bezeichnet wird.

Ein vorkonfektionierter ARE-Vorformling ist ein selbsttragendes Gebilde, das mehrere Ausgangskomponenten, darunter ein Primärrohr und mindestens ein Sekundärrohr enthält, das mit der Primärrohr-Innenseite verbunden ist, so dass Primärrohr und Sekundärrohr in Form des gefügten Gebildes zusammen handhabbar sind.

### Abstand der Sekundärrohre voneinander

Die Sekundärrohre haben einen Abstand voneinander. Bei einem vorkonfektionierten ARE-Vorformling mit genau zwei Sekundärrohren ist der Abstand der kürzeste freie Abstand zwischen den beiden Sekundärrohren. Bei einem vorkonfektionierten ARE-Vorformling mit mehr als zwei Sekundärrohren und mit unterschiedlichen Abständen voneinander ist der Abstand der kürzeste, auf gerader Linie gemessenen freie Abstand zwischen den beiden Sekundärrohren, die am nächsten zueinander angeordnet sind (jeweils im Querschnitt gesehen).

### Lange Hauptachse / kurze Hauptachse / Ovalitätsgrad

Als "lange Hauptachse" wird die längste Querschnittsachse und als "kurze Hauptachse" die kürzeste Querschnittsachse des ovalen Querschnitts des vorkonfektionierten ARE-Vorformlings bezeichnet. Im Fall eines elliptischen Querschnitts entspricht die lange Hauptachse der großen Halbachse und die kurze Hauptachse entspricht der kleinen Halbachse.

Der "Ovalitätsgrad" bezeichnet das Achsenlängenverhältnis der längsten Querschnittsachse und der kürzesten Querschnittsachse.

### Thermisches Strecken / Kollabieren / Elongierverhältnis

Die Anordnung von Primärrohr und Sekundärrohren oder das Ensemble werden thermisch gestreckt (elongiert). Die Streckung kann ohne gleichzeitiges Kollabieren erfolgen. Das thermische Strecken kann maßstäblich erfolgen, so dass sich beispielsweise die Form und Anordnung der Ausgangskomponenten des Ensembles im gestreckten, elongierten Endprodukt widerspiegeln. Beim thermischen Strecken kann das Ensemble oder die Anordnung aus Primärrohr und Sekundärrohren aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren kann mit einem thermischen Strecken kombiniert werden.

Das Elongierverhältnis berechnet sich hierbei als Verhältnis der Bauteil-Durchmesser vor und nach dem thermischen Strecken.

### Querschnitt / Innenbohrung

Der Begriff "Querschnitt" in Verbindung mit langestreckten ARE-Vorformlingen, deren zylinderförmigen Strukturelementen und dem Ensemble bezeichnet stets den Querschnitt senkrecht zur jeweiligen Längsachse, und zwar - sofern nichts anderes angegeben - bei rohrförmigen Bauteilen den Querschnitt der Außenkontur (nicht: den Querschnitt der Innenkontur).

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: ein loses Bauteil-Ensembles aus einem Primärrohr, zwei Sekundärrohren und einem Abstandshalter in einer Ansicht auf die Rohr-Stirnseiten,
- **Figur 2**: einen Querschnitt eines vorkonfektionierten ARE-Vorformlings, erhalten aus dem Bauteil-Ensemble von Figur 1 durch thermisches Strecken,
- **Figur 3**: einen Querschnitt einer primären Vorform mit einem Hüllrohr und fünf an der Hüllrohr-Innenseite angeordneten vorkonfektionierten ARE-Vorformlingen,
- **Figur 4**: einen Querschnitt einer durch Weiterverarbeitung der primären Vorform von Figur 3 erzeugten ersten sekundären Vorform,
- **Figur 5**: einen Querschnitt einer durch Weiterverarbeitung der ersten sekundären Vorform von Figur 4 erzeugten zweiten sekundären Vorform, und
- **Figur 6**: einen Querschnitt einer durch Weiterverarbeitung der zweiten sekundären Vorform von Figur 54 erzeugten Hohlkernfaser mit einem ALIF-Design.

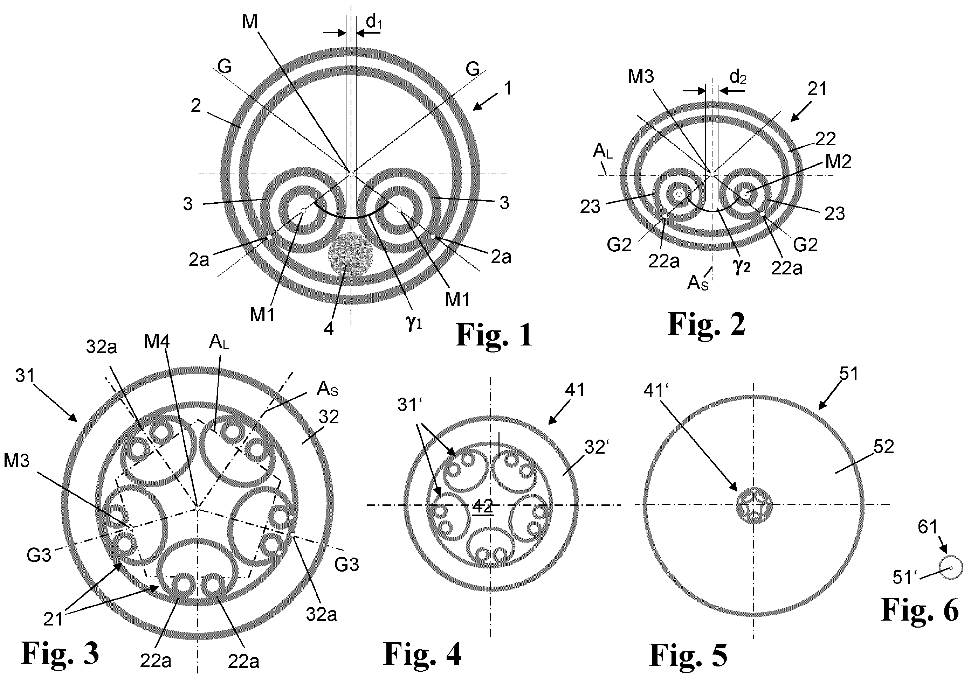

**Figur 1** zeigt im Querschnitt einen losen Zusammenbau 1 aus einem Primärrohr 2, zwei in der Primärrohr-Innenbohrung 2a angeordneten Sekundärrohren 3, und stabförmigen, kurzen Abstandshaltern 4, auf dem die Enden der Sekundärrohre 3 aufliegen. Die Rohre (2, 3) bestehen aus undotiertem Quarzglas und haben einen kreisrunden Innen- und Außenquerschnitt. Die Mittelachsen M des Primärrohres 1 und die beiden Mittelachsen M2 der Sekundärrohre 3 verlaufen parallel zueinander. Im Querschnitt liegen die beiden Sekundärrohre 3 jeweils an einer azimutalen Kontaktstelle 2a an der Primärrohr-Innenseite an. Die azimutalen Kontaktstellen 2a liegen jeweils auf Geraden G, die durch den Primärrohr-Mittelpunkt M und die jeweilige Sekundärrohr-Mittelpunkte M1 verlaufen. Die Geraden G schließen einen Winkel γ1 miteinander ein. Die beiden elongierten Sekundärrohre 3 haben einen freien Abstand d1 voneinander. Um jegliche Gefahr der Berührung der Sekundärrohre 3 während des thermischer Streckprozesses auszuschließen, beträgt der freie Abstand d1 bevorzugt mindestens 1mm. Und der Winkel γ1 liegt vorzugsweise beispielsweise im Bereich von 70 bis einschließlich 160 Grad, besonders bevorzugt im Bereich von 100 bis 140 Grad.

Die Enden der beiden Sekundärrohre 3 werden an der Innenseite des Primärrohres 2 lokal thermisch angebondet und dabei auch mit den Abstandshaltern 4 verschweißt. Danach wird der fixierte Zusammenbau 1 thermisch gestreckt, wobei ein vorgegebenes Elongierverhältnis eingestellt wird.

Resultat des Streckvorgangs ist ein vorkonfektionierter ARE-Vorformling 21 mit ovalem Querschnitt, wie ihn die Skizze von **Figur 2** anhand eines Beispiels zeigt. Das vormalige Primärrohr 2 bildet nun ein ovales elongiertes Primärrohr 22. Die beiden vormaligen Sekundärrohre 3 bilden elongierte Sekundärrohre 23, die über ihre gesamte Länge mit der Innenseite des elongierten Primärrohres 22 verschmolzen sind. Im gezeigten Querschnitt sind die Verschmelzungen als azimutale Kontaktstellen 22a erkennbar.

Die elongierten Sekundärrohre 23 haben weiterhin einen im Wesentlichen kreisrunden Querschnitt mit dem Mittelpunkt M2. Das elongierte Primärrohr 22 zeigt aber eine ausgeprägte Ovalität, die charakterisiert ist durch eine lange Hauptachse A_{L} und eine kurze Hauptachse As, die sich im Mittelpunkt M3 schneiden. Die beiden elongierten Sekundärrohre 23 befinden sich in gleicher Distanz beiderseits der kurzen Hauptachse A_{S} und sie haben einen freien Abstand d2 voneinander. Die Geraden G2, die durch den Mittelpunkt M3 und durch die azimutalen Kontaktstellen 22a der Sekundärrohre 23 verlaufen, schließen einen Winkel γ2 miteinander ein. Der Abstand d2 und der Winkel γ2 hängen vom Ovalitätsgrad des elongierten Primärrohres 22 ab. Je größer dieser ist, umso größer ist die Verlängerung des Abstands d2 gegenüber dem Abstand d1 und umso weiter ist der Winkel y2 im Vergleich zum Winkel γ1. Der Winkel γ2 liegt daher beispielsweise im Bereich von 75 bis 165 Grad, bevorzugt im Bereich von 105 bis 145 Grad. Die Winkel γ2 und Winkel γ1 sind im Ausführungsbeispiel spiegelsymmetrisch zur kurzen Hauptachse. Das heißt, die beiden Halbwinkel beiderseits der Achse sind jeweils gleich groß. Das ist jedoch keine obligatorische Symmetriebedingung.

Im Verlauf des thermischen Streckens des fixierten Zusammenbaus 1 verändert sich infolge der Verschmelzungen der elongierten Sekundärrohre 3 mit der Innenseite des Primärrohres 2 die periphere Wanddickenverteilung, was zu unsymmetrischen Wärmeeintrag und damit zu einem asymmetrischen Fließen des Glases und letztlich zur Ovalität des elongierten Primärrohres 22 führt.

In der Tabelle sind Abmessungen und Verfahrensparameter zu Ausführungsbeispielen der Erfindung und zu Vergleichsbeispielen aufgeführt.

**Tabelle 1**

| **Probe** | **1** | **2** | **3** | **4** | **5** | **6** | **7** | **8** | **9** | **10** |
|---|---|---|---|---|---|---|---|---|---|---|
| **Ausgangskomponenten - ARE-Vorformling** | | | | | | | | | | |
| Innendurchmesser Primärrohr [mm] | 44,00 | 44,00 | 25,00 | 25,50 | 30,00 | 30,00 | 99,00 | 99,00 | 44,00 | 24,00 |
| Wanddicke Primärrohr [mm] | 4,00 | 2,00 | 4,00 | 10,00 | 3,50 | 3,50 | 3,50 | 4,00 | 2,00 | 2,00 |
| Außendurchmesser Sekundärrohr [mm] | 18,30 | 18,30 | 12,00 | 12,20 | 13,50 | 13,50 | 43,00 | 45,00 | 18,30 | 10,00 |
| Winkel Gamma 1 [Grad] | 105 | 100 | 160 | 140 | 160 | 120 | 120 | 120 | 100 | 120 |
| Abstand d1 [mm] | 2,09 | 1,39 | 0,80 | 0,30 | 2,75 | 0,79 | 5,50 | 1,77 | 1,39 | 2,12 |
| | | | | | | | | | | |

| **Vorkonfektionierter ARE-Vorformling** | | | | | | | | | | |
|---|---|---|---|---|---|---|---|---|---|---|
| Elongierverhältnis | 3,60 | 8,00 | 5,00 | 5,00 | 5,00 | 5,00 | 5,00 | 5,00 | 14,00 | 5,00 |
| Ovalitätsgrad | 1,24 | 1,39 | 1,28 | 1,14 | 1,29 | 1,29 | 1,29 | 1,28 | 1,54 | 1,32 |
| Lange Hauptachse Primärrohr, elongiert [mm] | 12,93 | 9,53 | 6,37 | 6,50 | 7,65 | 7,65 | 27,11 | 25,24 | 7,20 | 5,63 |
| Kurze Halbachse Primärrohr, elongiert [mm] | 10,39 | 6,35 | 4,90 | 5,00 | 5,88 | 5,88 | 18,07 | 19,42 | 4,80 | 5,12 |
| Abstand d2 [mm] | 1,23 | 0,60 | 0,41 | 0,15 | 1,40 | 0,40 | 3,01 | 0,90 | 0,45 | 1,00 |

Probe 1 der Tabelle 1 ist ein typisches Ausführungsbeispiel der Erfindung. Die azimutalen Kontaktstellen 2a der Sekundärrohre schließen einen Winkel Gamma 1 von 105 Grad ein. Der Abstand d1 zwischen den Sekundärrohren beträgt 2,09mm. Nach einem thermische Strecken mit einem Elongierverhältnis von 3,6 wird ein vorkonfektionierter ARE-Vorformling erhalten, bei dem der Abstand d2 zwischen den elongierten Sekundärrohren 1,23mm beträgt.

Im Vergleich dazu ergibt sich bei Probe 2 insbesondere infolge des größeren Elongierverhältnisses und des kleineren Winkels Gamma 1 im vorkonfektionierten ARE-Vorformlinge ein Abstand d2 zwischen den elongierten Sekundärrohren von 0,6mm, der noch als hinreichend groß anzusehen ist.

Bei den Proben 3 und 4 hat das Primärrohr jeweils einen vergleichsweise kleinen Innendurchmesser, der von den Sekundärrohren fast vollständig ausgefüllt wird (d1=0,8mm; beziehungsweise d1=0,3mm). Bei dieser Konfiguration ergibt sich nach dem thermischen Strecken im vorkonfektionierten ARE-Vorformling ein geringer Abstand d2 zwischen den elongierten Sekundärrohren. Probe wird daher als Vergleichsbeispiel angesehen.

Die Ausgangskomponenten der Proben 5 und 6 haben gleiche Abmessungen. Die Proben unterscheiden sich nur in der Anordnung der Sekundärrohre (Winkel Gamma 1). Der größere Winkel Gamma 1 der Probe 5 bewirkt im vorkonfektionierten ARE-Vorformling einen großen Abstand d2 von 1,40mm, wohingegen bei sich bei Probe 6 ein sehr kleiner Abstand d2 von 0,40mm ergibt.

Bei den Proben 7 und 8 haben die Primärrohre einen vergleichsweise großen Innendurchmesser und die Sekundärrohre einen großen Außendurchmesser, so dass sie die Innenbohrung des Primärrohres fast vollständig ausfüllen. Bei Probe 8 ergibt sich infolgedessen ein Abstand d1 von 1,77mm, der nach dem thermischen Strecken im vorkonfektionierten ARE-Vorformling einen vergleichsweise geringen aber noch hinreichend großen Abstand d2 von 0,90 bewirkt.

Bei Probe 9 führt ein vergleichsweise großes Elongierverhältnis von 14 bei den gegebenen Abmessungen der Ausgangskomponenten zu einem hohen Ovalitätsgrad von 1,54.

Probe 10 ist ein Vergleichsbeispiel. Der thermische Streckvorgang konnte bei dieser Probe nicht abgeschlossen werden. Dies kann möglicherweise darauf zurückgeführt werden, dass die radialen Abmessungen des ursprünglichen Primärrohres und der ursprünglichen Sekundärrohre zu klein waren, um eine ausreichende mechanische Stabilität bewirken zu können.

Die vorkonfektionierten ovalen ARE-Vorformlinge 21 werden zur Herstellung eines Ensembles 31 (primäre Vorform) eingesetzt. Dabei werden fünf vorkonfektionierter ARE-Vorformling 21 in der Innenbohrung eines Hüllrohres 32 mit einem Außendurchmesser von 41mm angeordnet. Wie in der Querschnittsdarstellung von **Figur 3** zu erkennen, werden die vorkonfektionierten ARE-Vorformlinge 21 an peripheren Kontaktstellen 32a der Innenseite des Hüllrohres 32 gleichmäßig verteilt und dabei so orientiert, dass die kurzen Hauptachsen A_{S} jeweils radial zur Hüllrohr-Mittelachse M4 verlaufen. Für diesen Zweck kann eine Positionierungsschablone verwendet werden. Die beiden azimutalen Kontaktstellen 22a an der Innenseite eines jeden der elongierten Primärrohre 22 befinden sich beidseitig und im gleichen Abstand zu einer Geraden G3, die durch die Hüllrohr-Mittelachse M4 und durch die periphere Kontaktstelle 32a an der Innenseite des Hüllrohres 32 verläuft. Die Gerade G3 verläuft dabei gleichzeitig in der kurzen Hauptachse A_{S} des elongierten und oval verformten Primärrohres 22.

Im Bereich ihrer stirnseitigen Enden werden die ARE-Vorformlinge 21 an der Hüllrohr-Innenseite angeschmolzen und in einem ersten thermischen Streckvorgang zu einer ersten sekundären Vorform (Kernvorform 41) mit einem Außendurchmesser von 23mm elongiert. **Figur 4** zeigt einen Querschnitt der Kernvorform 41 (cane), die durch thermisches Strecken des Ensembles 31 erhalten worden ist. Bei diesem Heißverformungsprozess verbinden sich die ursprünglichen vorkonfektionierten ARE-Vorformlinge 21' über ihre gesamte Länge mit der Innenseite des vormaligen Hüllrohres 32`

**Figur 5** zeigt eine zweite sekundäre Vorform 51, die durch thermisches Strecken der ersten sekundären Vorform (vormalige Kernvorform 41) bei gleichzeitigem Überfangen mit Mantelmaterial 52 erhalten worden ist und deren Außendurchmesser 28mm beträgt. Die vormalige Kernvorform ist mit der Bezugsziffer 41' bezeichnet. Sie umfasst einen hohlen Kernbereich 42, der von einem inneren

Mantelbereich umgeben ist, der von den vormaligen ARE-Vorformlingen 31' gebildet wird, und einen äußeren Mantelbereich, der vom ehemaligen Hüllrohr 32` gebildet wird.

**Figur 6** zeigt schematisch eine Hohlkernfaser 61 mit ALIF-Design mit einem Außendurchmesser von 0,23mm, die durch Ziehen der zweiten sekundäre Vorform 51 erzeugt wird. Beim Faserziehprozess kommt es auch zu einer weiteren Verringerung des freien Abstands der elongierten Sekundärrohre zueinander. Ein Kontakt wird aber verhindert, was auf die anfängliche Ovalität der vorkonfektionierten ARE-Vorformlinge 21 und insbesondere auf die Ovalität der elongierten Primärrohre 22 zurückgeführt werden kann.

## Patentansprüche

1. Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl von rohrförmigen Antiresonanzelement-Vorformlingen (kurz: ARE-Vorformlingen), die jeweils ein Primärrohr und mindestens zwei Sekundärrohre umfassen, wobei jedes Primärrohr eine Primärrohr-Innenbohrung, eine Primärrohr-Außenseite und eine Primärrohr-Innenseite aufweist,
(c) Anordnen der Vielzahl der ARE-Vorformlinge in der Hüllrohr-Innenbohrung unter Bildung einer primären Vorform, wobei die Primärrohre um die Hüllrohr-Innenseite gleichmäßig verteilt werden,
(d) thermisches Strecken der primären Vorform zu der Hohlkernfaser oder Weiterverarbeitung der primären Vorform zu einer sekundären Vorform, aus der die Hohlkernfaser gezogen wird,
**dadurch gekennzeichnet, dass** das Bereitstellen der ARE-Vorformlinge gemäß Verfahrensschritt (b) jeweils umfasst:
• Anordnen der mindestens zwei Sekundärrohre mit Abstand zueinander an azimutalen Kontaktstellen (2a) an der Primärrohr-Innenseite,
• thermisches Strecken der Anordnung von Primärrohr und Sekundärrohren unter Bildung eines vorkonfektionierten ARE-Vorformlings (21), der einen ovalen Querschnitt mit einer langen Hauptachse (A_{L}) und mit einer kurzen Hauptachse (As) aufweist, wobei die azimutalen Kontaktstellen (22a) beidseitig der kurzen Hauptachse (As) liegen,
wobei zum Anordnen der Vielzahl der ARE-Vorformlinge gemäß Verfahrensschritt (c) mehrere der vorkonfektionierten ARE-Vorformlinge an peripheren Kontaktstellen (32a) der Hüllrohr-Innenseite gleichmäßig verteilt und so angeordnet werden, dass die kurzen Hauptachsen (As) jeweils radial zur Hüllrohr-Mittelachse (M4) verlaufen.

2. Verfahren nach Anspruch 1, **dadurch gekennzeichnet, dass** die vorkonfektionierten ARE-Vorformlinge einen Ovalitätsgrad von mindestens 1,1 aufweisen.

3. Verfahren nach Anspruch 1 oder 2, **dadurch gekennzeichnet, dass** die Sekundärrohre im vorkonfektionierten ARE-Vorformling einen Abstand (d2) im Bereich von mindestens 500µm voneinander haben, bevorzugt einen Abstand (d2) im Bereich von 1 bis 5mm, besonders bevorzugt weniger als 3mm.

4. Verfahren nach einem oder mehreren der vorhergehenden Ansprüche, **dadurch gekennzeichnet, dass** das Primärrohr einen anfänglichen Innendurchmesser von mindestens 25mm und eine Wanddicke von mindestens 1,5mm aufweist.

5. Verfahren nach einem oder mehreren der vorhergehenden Ansprüche, **dadurch gekennzeichnet, dass** die Sekundärrohre einen anfänglichen Außendurchmesser von mindestens 12mm und eine Wanddicke von mindestens 1,5mm aufweisen.

6. Verfahren nach einem oder mehreren der vorhergehenden Ansprüche, **dadurch gekennzeichnet, dass** beim thermischen Strecken der Anordnung von Primärrohr und Sekundärrohren unter Bildung des vorkonfektionierten ARE-Vorformlings ein Elongierverhältnis von mindestens 3,5 eingestellt wird.

7. Verfahren nach einem oder mehreren der vorhergehenden Ansprüche, **dadurch gekennzeichnet, dass** im Querschnitt des vorkonfektionierten ARE-Vorformlings sich die lange Hauptachse und die kurze Hauptachse in einem Mittelpunkt schneiden, und dass Geraden durch den Mittelpunkt und die azimutalen Kontaktstellen von zwei der Sekundärrohre einen Winkel von maximal 160 Grad einschließen, bevorzugt einen Winkel im Bereich von 70 bis 160 Grad und besonders bevorzugt einen Winkel von 100 bis 140 Grad.

8. Verfahren nach einem oder mehreren der vorhergehenden Ansprüche, **dadurch gekennzeichnet, dass** zwei azimutale Kontaktstellen (22a) beidseitig der kurzen Hauptachse (As) liegen und von dieser die gleiche Distanz haben.

9. Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl von rohrförmigen ARE-Vorformlingen, die jeweils ein Primärrohr und mindestens zwei Sekundärrohre umfassen, wobei jedes Primärrohr eine Primärrohr-Innenbohrung, eine Primärrohr-Außenseite und eine Primärrohr-Innenseite aufweist,
(c) Anordnen der Vielzahl der ARE-Vorformlinge in der Hüllrohr-Innenbohrung unter Bildung einer primären Vorform, wobei die Primärrohre um die Hüllrohr-Innenseite gleichmäßig verteilt werden,
(d) Weiterverarbeitung der primären Vorform zu einer sekundären Vorform,
**dadurch gekennzeichnet, dass** das Bereitstellen der ARE-Vorformlinge gemäß Verfahrensschritt (b) jeweils umfasst:
• Anordnen der mindestens zwei Sekundärrohre mit Abstand zueinander an azimutalen Kontaktstellen an der Primärrohr-Innenseite,
• thermisches Strecken der Anordnung von Primärrohr und Sekundärrohren unter Bildung eines vorkonfektionierten ARE-Vorformlings, der einen ovalen Querschnitt mit einer langen Hauptachse und mit einer kurzen Hauptachse aufweist, wobei die azimutalen Kontaktstellen beidseitig der kurzen Hauptachse liegen und von dieser den gleichen Abstand haben,
wobei zum Anordnen der Vielzahl der ARE-Vorformlinge gemäß Verfahrensschritt (c) mehrere der vorkonfektionierten ARE-Vorformlinge an peripheren Kontaktstellen der Hüllrohr-Innenseite gleichmäßig verteilt und so angeordnet werden, dass die kurzen Hauptachsen jeweils radial zur Hüllrohr-Mittelachse verlaufen.

10. Vorform-Vorprodukt für eine antiresonante Hohlkernfaser, wobei das Vorform-Vorprodukt umfasst: ein Hüllrohr mit einer Hüllrohr-Innenbohrung, einer Hüllrohr-Innenseite und einer Hüllrohr-Mittelachse, sowie eine Anzahl an einer Innenseite der Hüllrohr-Wandung angeordneter ARE-Vorformlinge, die jeweils ein Primärrohr und mindestens zwei Sekundärrohre aufweisen, wobei jedes Primärrohr eine Primärrohr-Innenbohrung, eine Primärrohr-Außenseite und eine Primärrohr-Innenseite aufweist, und wobei die mindestens zwei Sekundärrohre mit Abstand zueinander an azimutalen Kontaktstellen an der Primärrohr-Innenseite angeordnet sind, **dadurch gekennzeichnet, dass** mindestens einige der ARE-Vorformlinge als vorkonfektionierter ARE-Vorformlinge vorliegen, die jeweils einen ovalen Querschnitt mit einer langen Hauptachse und mit einer kurzen Hauptachse aufweisen, wobei die azimutalen Kontaktstellen beidseitig der kurzen Hauptachse liegen, und dass mehrere der vorkonfektionierten ARE-Vorformlinge an peripheren Kontaktstellen der Hüllrohr-Innenseite gleichmäßig verteilt und so angeordnet sind, dass die kurzen Hauptachsen jeweils radial zur Hüllrohr-Mittelachse verlaufen.

11. Vorform-Vorprodukt nach Anspruch 10, **dadurch gekennzeichnet, dass** das die vorkonfektionierten ARE-Vorformlinge einen Ovalitätsgrad von mindestens 1,1 aufweisen.

12. Vorform-Vorprodukt nach Anspruch 10 oder 11, **dadurch gekennzeichnet, dass** die Sekundärrohre im vorkonfektionierten ARE-Vorformling einen Abstand im Bereich von mindestens 500µm voneinander haben, bevorzugt einen Abstand im Bereich von 1 bis 5mm.

13. Vorform-Vorprodukt nach einem oder mehreren der Ansprüche 10 bis 12, **dadurch gekennzeichnet, dass** im Querschnitt der vorkonfektionierten ARE-Vorformlinge sich die lange Hauptachse und die kurze Hauptachse in einem Mittelpunkt schneiden, und dass Geraden durch den Mittelpunkt und die azimutalen Kontaktstellen von zwei der Sekundärrohre einen Winkel von weniger als 165 Grad einschließen, bevorzugt einen Winkel im Bereich von 75 bis 165 Grad.

14. Vorform-Vorprodukt nach einem oder mehreren der vorhergehenden Ansprüche 10 bis 13, **dadurch gekennzeichnet, dass** zwei azimutale Kontaktstellen (22a) beidseitig der kurzen Hauptachse (As) liegen und von dieser die gleiche Distanz haben.
